(19) 

**Europäisches Patentamt**
**European Patent Office**
**Office européen des brevets**

(11) **EP 4 656 564 A1**

(12) **EUROPEAN PATENT APPLICATION**

(43) Date of publication:
03.12.2025 Bulletin 2025/49

(21) Application number: 24179297.7

(22) Date of filing: **31.05.2024**

(51) International Patent Classification (IPC):
**B65G 54/02** (2006.01) **H02K 41/03** (2006.01)

(52) Cooperative Patent Classification (CPC):
**B65G 54/02; H02K 41/031**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **ABB Schweiz AG**
**5400 Baden (CH)**

(72) Inventors:
• **Flixeder, Stefan**
  **4840 Vöcklabruck (AT)**
• **Almeder, Alexander**
  **3910 Zwettl (AT)**

(74) Representative: **Patentanwälte Pinter & Weiss OG**
**Prinz-Eugen-Straße 70**
**1040 Wien (AT)**

(54) **HYBRID SHUTTLE FOR PLANAR AND LONG STATOR LINEAR MOTORS**

(57) In order to improve the interplay and especially handover between a long stator linear motor and a planar motor, a hybrid shuttle (3) which is movable along a planar motor stator (2P) of a planar motor (PM) in at least two planar motor movement directions (H1, H2) of the planar motor (PM) as well as along a linear motor stator (2L) of a long stator linear motor (LLM) in an linear motor movement direction (H0) of the long stator linear motor (LLM) is provided, the shuttle (3) comprising at least one first bearing component (G1) designed to detachably engage with a second bearing component (G2) to form a guide system (G), said guide system (G) being designed to guide the movement of the shuttle (1) along the linear motor movement direction (H0).

Fig. 4b

EP 4 656 564 A1

## Description

Field of the invention

The present invention relates to a hybrid shuttle which is movable along a planar motor stator of a planar motor in at least two planar motor movement directions of the planar motor as well as along a linear motor stator of a long stator linear motor in a linear motor movement direction of the long stator linear motor, to an arrangement of a long stator linear motor and a planar motor designed to drive said hybrid shuttle, and to a method for operating said arrangement.

Background

In modern transportation systems, it is oftentimes necessary to move transport units, i.e., parts, components, goods, etc., over transport distances between spatially distant stations, e.g., processing stations or production stations or service stations. Various transport systems are known for this purpose, e.g., conveyor belts. In the recent past, however, especially electromagnetic transport systems have been used to that end, such as long stator linear motors (LLM) and planar motors (PM). In particular, LLMs and PMs are employed to meet high requirements with regards to flexibility and efficiency that are typically posed to modern transportation systems and are not achievable with, e.g., a conveyor belt. In LLMs and PMs, goods to be transported are picked up and moved by a potentially large number of shuttles. In comparison to LLMs, PMs provide certain advantages, such as an increased number of degrees of freedom available for moving said transport units, improved flexibility, no wear, etc. On the downside, among other aspects, PMs are more expensive, less dynamic, and, in most cases, require more complex control strategies to operate the system as well as to control the movements of said shuttles.

LLMs, their applications and their mode of operation are well known from the prior art. LLMs generally consist of a stator (hereafter also referred to as a " linear motor stator" or "LLM stator") and at least one shuttle (hereafter also referred to as a "mover" or "transport unit"), which shuttle is used to transport components or goods. As described in US 6,876,107 B2, an LLM stator is usually composed of a plurality of stator segments, whereby a plurality of drive coils (hereafter also referred to as "LLM coils") are arranged in a fixed position next to one another on the LLM stator or on the stator segments of the LLM stator. The stator segments can have different geometries, such as straight lines, curves, switches, and can be assembled into a desired LLM stator by stringing them together. The LLM stator forms a set of at least one path along which a shuttle or several shuttles can be moved. The shuttles are held and guided along the LLM stator. For moving a shuttle on an LLM, typically only one degree of freedom is available, which degree of freedom coincides with the path formed by the LLM stator, i.e., by the linear motor stator. For holding and guiding a shuttle along an LLM stator, a guide system is provided, comprising a first bearing component on the shuttle and a second bearing component on the linear motor stator. The bearing components are designed to detachably engage with one another. In case said bearing components engage, the freedom of movement of the shuttle is restricted to the degree of freedom coinciding with the path formed by the LLM stator.

PMs are known from the prior art as well. For example, US 9,202,719 B2 discloses the basic structure and basic mode of operation of a PM. As an LLM, a PM also comprises a stator, which, in contrast to an LLM stator, forms a movement plane in which one or more shuttles can be moved in at least two dimensions, allowing for at least two degrees of freedom for moving a shuttle. In a PM, drive coils are usually arranged in the movement plane, in some designs also in several planes stacked above or below one another. In case a PM is designed to also allow for lifting, lowering and rotating a shuttle, up to six degrees of freedom for moving a shuttle can be achieved.

In order to bring about a controlled movement of a shuttle for transporting a part or a good or a component, in an PM or LLM, drive magnets (permanent magnets or electromagnets) are provided on the shuttles, and position sensors (AMR sensors, Hall elements, etc.) are provided on the stator, i.e., the planar motor stator or the linear motor stator, in addition to the drive coils installed on the stator. By controlling the drive coils, a moving magnetic field ("magnetic drive field") can be generated, which interacts with the drive magnets of the shuttles to move the shuttles. In a known manner, the drive coils are controlled in particular by means of control units provided for this purpose, which output firing pulses to semiconductor switches, such as IGBT modules, in order to apply corresponding coil voltages to the drive coils to generate drive currents in the coils to generate said magnetic drive field, eventually. Drive coils that are controlled and therefore energized for the purpose of generating a magnetic drive field are referred to as "active" drive coils. In order to move a shuttle along a stator, some of the drive coils are active drive coils, whereby normally de-energized drive coils become active drive coils and active drive coils become de-energized drive coils. A shuttle can thus be moved in the direction of a moving magnetic drive field.

Further explanations of LLMs, PMs as well as a large number of design options for LLMs and PMs can be found in WO 2013/143783 A1, WO 98/50760 A2, US 6,876,107 B2, US 2013/0074724 A1, WO 2004/103792 A1 or EP 1 270 311 B1, among other literature, so that no further implementation details of these drive forms will be discussed here.

As mentioned at the outset, PMs provide several advantages compared to conventional transportation systems, such as conveyor belts, but also to LLMs.

As mentioned above, planar motors allow for movements of shuttles with up to six degrees of freedom of movement, as well as for high repeatability, for reduced wear and tear etc. Compared to LLMs, PMs are more cost-intensive, however, both in terms of running costs (power consumption) and in terms of initial costs, i.e., procurements costs. For this reason, it is expedient to use planar motors particularly for tasks where they unequivocally show their advantages. An important area where PMs stand out are processing stations. In a processing station, goods and components transported by PM shuttles are processed, assembled, modified, or exchanged with other components. In such spatial areas, it is oftentimes necessary to (quickly) spatially arrange and / or rearrange a potentially great number of shuttles, e.g., to have a series of components and / or goods assembled in a pre-defined order.

On the contrary, transportation between processing stations typically requires less accuracy and fewer degrees of freedom regarding the movements of shuttles. For this reason, amongst others, LLMs are oftentimes used to connect processing stations, where PMs are employed to carry out movements and manipulations with high precision. However, As LLMs and PMs employ different stator concepts, which particularly differ in the way shuttles are guided when being moved along the stator (on an LLM by a guide system, on a PM by magnetic levitation), known concepts to connect LLMs and PMs typically demand to transfer a good to be transported from a PM-shuttle to an LLM-shuttle and vice versa. Such transitions are complex, and need to be attended to with great care, especially when fragile goods are transported. This complexity complicates the operation of a system comprising PMs (in processing stations) as well as LLMs (to provide connecting paths between processing stations). Adding to this complexity, coordinating and synchronizing the movements of PM- and LLM-shuttles in intersections of LLMs and PMs oftentimes turns out to be particularly demanding.

Summary

It is therefore an object of the invention to improve the interplay and especially handover between a long stator linear motor and a planar motor.

This object, for the hybrid shuttle mentioned at the outset, is achieved in that the hybrid shuttle further comprises at least one first bearing component, the first bearing component being designed to detachably engage with a second bearing component to form a guide system, said guide system being designed to guide the movement of the shuttle along the linear motor movement direction.

The invention suggests to equip a planar motor shuttle with a bearing component. By equipping a planar motor shuttle with a bearing component, hence allowing a planar motor shuttle to be moved on a long stator linear motor as well, a series of advantages is achieved.

First, in an arrangement comprising combinations of PMs and LLMs, the number of components is reduced. In the prior art, PM-shuttles for PM sections of such an arrangement as well as LLM-shuttles for LLM sections have to be provided. With typical shuttles known from the prior art, it is neither possible to move a PM shuttle on an LLM, due to the lack of bearing components to allow for guiding, nor to move an LLM shuttle unrestrictedly on a PM, due to the lack of magnet groups in the shuttle allowing for a movement in at least two directions. With the hybrid shuttle according to the invention, a single shuttle can be moved on both an LLM and on a PM. A multiple of shuttles for said different LLM sections and PM sections thus is no longer needed, reducing the number of necessary shuttles when setting up an arrangement comprising LLMs and PMs.

The core idea of the invention hence is to effectively combine a PM system and an LLM system, exploiting the benefits of both systems, and enabling a hybrid shuttle design which can be driven by a PM as well as by an LLM. The proposed shuttle can run on both an LLM and on a PM. The invention, in comparison to concepts known from the prior art, results in reduced footprint, reduced power consumption, increased throughput, and higher shuttle velocities, especially in comparison to systems where conveyor belts are used for connecting different planar motors instead of LLMs, as LLMs generally allow higher velocities and lower distances between the used shuttles, among other reasons due to simplified collision avoidance.

Second, besides the reduction of component count and component outlay, controlling and operating an arrangement having PM sections as well as LLM sections is simplified significantly by using a hybrid shuttle according to the invention. On the one hand, goods transported by said PMs and LLMs, e.g., between processing stations, no longer need to be transferred from one shuttle to another to allow for transport in both an LLM section as well as in a PM section. Besides simplifying control and operation strategies, also protection of said goods is increased in this fashion, as transitions between shuttles, which are well-known sources for errors and damages, are avoided. On the other hand, reducing the number of shuttles needed for transportation of a given amount of goods in an arrangement having an LLM and a PM ultimately reduces the number of shuttles that need to be synchronized. Shuttles need to be synchronized to avoid collisions and damages. However, synchronizing a potentially large number of shuttles and especially planning appropriate trajectories for a potentially large number of shuttles oftentimes is a tedious, complex and cumbersome task, which is simplified significantly by employing a hybrid shuttle according to the invention.

According to the invention, at least one first bearing component is provided on the hybrid shuttle. Of course, the second bearing component is not part of the hybrid shuttle itself, as otherwise it would not be possible to bring about the desired stabilizing and guiding effect on the shuttle, when moving it on an LLM. Most preferably, said second bearing component forms a part of a linear motor stator of a long stator linear motor. However, also other setups are conceivable, the second bearing component being provided spatially separate from an LLM stator, e.g., in form of a separate mechanical component to guide the shuttle along the LLM stator.

As will be explained in detail later, also a multiple of first bearing components may be provided on a hybrid shuttle according to the invention, e.g., on opposing sides or on opposing side faces of a shuttle or on the edges of a rectangularly shaped hybrid shuttle according to the invention, such as a rectangularly shaped hybrid shuttle. In this case, each first bearing component of said multiple of bearing components may advantageously be designed to detachably engage with a complementary second bearing guide component to guide the hybrid shuttle in just a single direction, i.e., a single degree of freedom corresponding to a direction of movement along which the shuttle may be moved on an LLM.

As explained above, the at least one bearing component provided on the hybrid shuttle, when engaged with said complementary at least one second bearing component, allows to guide the movement of the shuttle along said linear motor movement direction. Guiding the movement of the shuttle, in the present context, is to be understood as stabilizing the degrees of freedom of the shuttle, with exception of the degree of freedom corresponding to the movement direction allowed for by the linear motor stator. Stabilizing a degree of freedom in turn is to be understood as prohibiting undesired movements along this degree of freedom. If said hybrid shuttle according to the invention is moved by an LLM, where said first and second bearing components engage in order to guide the movement, i.e., by electrically powering the LLM coils to drive the shuttle, as described at the outset, only a movement along the path formed by the LLM stator can hence be achieved. Consequently, the function of the guide system formed by said at least one first and said at least one second bearing component may be described as restricting the movement of the shuttle to a single degree of freedom, this single degree of freedom coinciding with the direction of a path formed by an LLM stator. "Restricting", in the present context, however, does not mean that no other movement besides a movement along said linear motor movement direction is possible at all any longer. Restricting in the present context means that by operating an LLM in well-known fashion, as described previously, a movement of a shuttle can only be achieved in said linear motor movement direction. By applying different means to move a shuttle, however, e.g., lifting a shuttle by hand, or lifting a shuttle by means of a robot etc., a shuttle may also be moved in a degree of freedom that is actually stabilized by said guide system, e.g., to insert a shuttle into an LLM and / or to remove it from an LLM. Hence, the term "restriction" mentioned above refers to the movements achievable by operating the LLM.

Regarding the implementation of said guide system, the invention allows for great flexibility. Specifically, the first bearing component may be part of a mechanical bearing or of an electromagnetic bearing or of a magnetic bearing or of an air bearing. Depending on the specific type of bearing (mechanical, electromagnetic, air) the first bearing component may comprise at least one sliding component of a slide bearing, or the first bearing component may comprise at least one roller of a rolling bearing, or the first bearing component may comprise a cylinder of a rolling bearing, or the first bearing component may comprise a shaft of a linear bearing. Such bearing systems are well-known in the prior art, e.g., from US 2022/0316525 A1, or from EP 3 045 749 B1, or from US 2007/0024139 A1 etc.

The at least one first bearing component may be an integral part of the hybrid shuttle according to the invention. Specifically, the at least one first bearing component may be milled into the body of said hybrid shuttle, or molded, or drilled, or welded onto the body of the hybrid shuttle. E.g., in case the at least one first bearing component is implemented in form of a bearing recess of a ball bearing, allowing to accept a ball of the guide system, the form of the bearing recess may be cut into the body of the shuttle by means of an appropriate cutting method, like those mentioned above.

However, the first bearing component provided on the shuttle according to the invention may also be detachable, and may hence be detachably mounted on the shuttle, such that the first bearing component is not an integral part of the shuttle. In this embodiment, the first bearing component may, e.g., be mounted on the hybrid shuttle by means of an appropriate plug system, or by means of an appropriate screw system, by means of an appropriate clamping system.

In order to secure the ability of the hybrid shuttle to be moved unrestrictedly in a movement plane of a planar motor, i.e., in at least two planar motor movement directions, in the shuttle according to the invention, a first magnet group and a second magnet group are beneficially provided, the first and second magnet group being mechanically linked, to ensure mechanical stability and mechanical integrity of the shuttle. In the first magnet group of the shuttle, a first plurality of drive magnets may be provided in this case, the first plurality of drive magnets arranged one behind another in a first arrangement direction. Correspondingly, in the second magnet group of the shuttle, a second plurality of drive magnets may be provided, the second plurality of drive magnets also arranged one behind another in a second arrangement direction different from said first arrangement direction, such that the hybrid shuttle may be moved unrestrictedly in the in at least two planar motor movement directions (hereafter short "PM-movement directions") on a movement plane of a planar motor. To that end, the first and second arrangement direction typically span a pre-defined arrangement angle, the arrangement angle being selected as an angle between 45 degrees and 135 degrees, preferably between 60 degrees and 120 degrees, or more preferably between 75 degrees and 105 degrees, or most preferably equal to 90 degrees.

In a particularly advantageous embodiment of the invention, said first and second magnet group may be used to create both a movement on a planar motor stator as well as on a linear motor stator. This means that the same magnets are used for driving the shuttle on a PM as well as on an LLM. Specifically, to that end, the first plurality of drive magnets of the first magnet group of the shuttle and / or the second plurality of drive magnets of the second magnet group of the shuttle may be designed to electromagnetically interact with drive coils of a linear motor stator of a long stator linear motor, creating a drive force to drive the shuttle along the linear motor stator of the long stator linear motor.

However, also a third magnet group comprising a third plurality of drive magnets may be provided in the shuttle, specifically for bringing about a movement on an LLM. The third plurality of drive magnets may, in a particularly preferred fashion, be designed to electromagnetically interact with drive coils of a linear motor stator of a long stator linear motor, creating a drive force to drive the shuttle along the linear motor stator of the long stator linear motor. Said third magnet group may be detachably linked to the first and / or second magnet group, such that different third magnet groups may be attached to the shuttle, allowing for an optimized adaptation of the shuttle to different LLM stators. As explained with regards to the at least one first bearing component, also the third magnet group may be mounted on the hybrid shuttle by means of an appropriate plug system, or by means of an appropriate screw system, by means of an appropriate clamping system. In a particularly preferred embodiment, the third magnet group and the at least one first bearing component may together form an integral, single component, which may be detachably mounted on the shuttle, such the third magnet group and the at least on first bearing component may be clamped or plugged to the hybrid shuttle together. However, said third magnet group may also form an integral part of the shuttle. Providing the first bearing component as well as the third magnet group in form of integral components in many use cases allows to achieve higher mechanical integrity and stability of the shuttle.

Besides the hybrid shuttle discussed above, the object of the invention is also achieved by an arrangement of at least one planar motor and a long stator linear motor, the at least one planar motor mechanically connected to the long stator linear motor, and a hybrid shuttle according to the invention, the at least one planar motor and the long stator linear motor being designed to drive the hybrid shuttle from the at least one planar motor to the long stator linear motor and vice versa, as well as by a method for operating such an arrangement. In preferred embodiments, said arrangement may of course also comprise a plurality of planar motors which are connected by a plurality of long stator linear motors. As mentioned earlier, it is oftentimes advantageous to design the second bearing component as a part of a linear motor stator of the long stator linear motor in such an arrangement, while the second bearing component may also be implemented separate from said long stator.

Detailed description

The present invention is described below in greater detail with reference to Figs.1 to 6, which show schematic and non-limiting advantageous embodiments of the invention by way of example. In the drawings:

Fig.1 shows an embodiment of a stator in the form of a long stator linear motor,

Fig.2a, 2b different views of an exemplary embodiment of a planar motor,

Fig.3a, 3b possible arrangements to connect a plurality of planar motors,

Fig.4a, 4b cross sectional views of a shuttle according to the invention positioned on a long stator linear motor and on a planar motor,

Fig.5a-d different arrangements of magnet groups,

Fig.6a, 6b two options for detachable links between the magnet groups according to the invention.

As the present invention is concerned with the interplay between long stator linear motors (LLM) and planar motors (PM), these motor types are discussed briefly at this point.

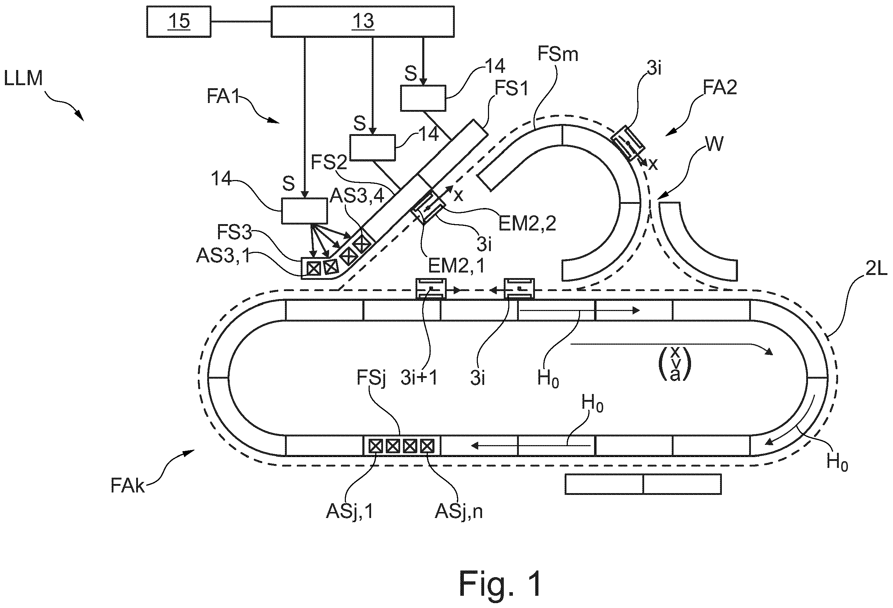

To that end, Fig.1 shows an example of an arbitrary structure of a long stator linear motor (LLM) comprising a linear motor stator 2L and plurality of shuttles 3i, $i \in \mathbb{N}$. The shuttles 3i can be moved along the linear motor stator 2L, in a linear motor movement direction H0 (hereafter short "LLM-movement direction" H0). As is well known from the prior art, in an LLM, there exists only one degree of freedom (DOF) when moving a shuttle 3i, which degree of freedom coincides with the LLM-movement direction H0 fixed by the structure of a linear motor stator 2L, i.e., with the path formed by the linear motor stator 2L. The linear motor stator 2L is essentially defined by the stationary long stator 2L of the LLM 1. In the exemplary embodiment shown, a number of stator segments FSj, $j \in \mathbb{N}$ are provided, defining a path for the shuttles 3i. The stator segments FSj are arranged on a suitable construction. Each stator section FAk comprises at least one stator segment FSj, normally several stator segments FSj. Individual stator sections FAk may partially overlap along the linear motor stator 2L in a direction x on different sides of a shuttle 3i, especially at diverter locations W of the linear motor stator 2L at which a transition from a first stator section FAk on one side to another stator section FAk on another side of a shuttle 3i (such as from the stator section FA1 to the stator section FA2) can take place.

Each stator segment FSj comprises a number n of drive coils ASj,n, $j \in \mathbb{N}, \, n \in \mathbb{N}$ arranged next to one another in direction x, wherein the number n does not have to be the same for each stator segment FSj. In Fig. 1, for the sake of clarity, only drive coils ASj,n of some stator segments FSj are shown. Each shuttle 3i comprises a number m of excitation magnets EMi,m, $i \in \mathbb{N}, m \in \mathbb{N}$ (permanent magnets or electromagnets), preferably on both sides of the shuttle 3i. The drive coils ASj,n generate a moving magnetic field and interact in the operation of the LLM in a known manner according to the electric motoring principle with said excitation magnets EMi,m of the shuttles 3i in the magnetic field of the drive coils ASj,n. If the drive coils ASj,n are energized in the area of a shuttle 3i with a coil current by applying a coil voltage to the coil, a magnetic flux is produced, which, in cooperation with the excitation magnets EMi,m, causes a force on the shuttle 3i. Depending on the coil current, this force can comprise, as is well-known from the prior art, a propulsion or driving force Fd component to move a shuttle 3i in a desired direction and/or a lateral force-forming force component to hold the shuttle 3i on the linear motor stator 2L. The propulsion or driving force Fd component essentially serves for the movement of the shuttle 3i in a movement direction H0 and the lateral force component can be used to guide the shuttle 3i, but also to steer the shuttle 3i in case that is necessary. In this way, each shuttle 3i can be moved individually and independently along the linear motor stator 2L by supplying the drive coils ASj,n in the region of each shuttle 3i with a corresponding coil current in accordance with the movement to be carried out.

In order to control the movement of individual shuttles 3i in said LLM-movement direction H0, a shuttle control unit 13 (hardware and/or software, e.g., FPGA, microcontroller etc.) is provided in which setpoint values S for the movement of the shuttles 3i are generated or determined. The setpoint values S may comprise desired speeds or desired accelerations or desired jerks that are to be implemented in the course of moving a shuttle 3i. The setpoint variables S may thus prescribe set point values for said movement quantities x, v, a, that are decoded in a trajectory for moving a shuttle 3i from a position A to a position B. Of course, it is equally possible to provide a plurality of shuttle control units 13, which are each assigned to a part of the linear motor stator 2L, e.g. a stator section FAk, and which control the movement of the shuttles 3i in this part only, by appropriately supplying the drive coils ASj,n. In addition, also segment control units 14 (hardware and/or software) can be provided, which are assigned to a stator segment FSj (or to several stator segments FSj or also to a part of a stator segment FSj) and which convert setpoint specifications from an associated shuttle control unit 13 for a shuttle 3i into coil currents for an associated drive coil ASj,n.

When moving a plurality of shuttles 3i, it is to be ensured in the stator control unit 15 or the shuttle control unit 13 that no inadmissible states occur on the linear motor stator 2L. This primarily comprises the avoidance of collisions between two or more shuttles 3i, especially when more than one shuttle 3i is to be moved from location or processing station A to location or processing station B. As the basic operation principle of a LLM is well known, further details will not be discussed at this point.

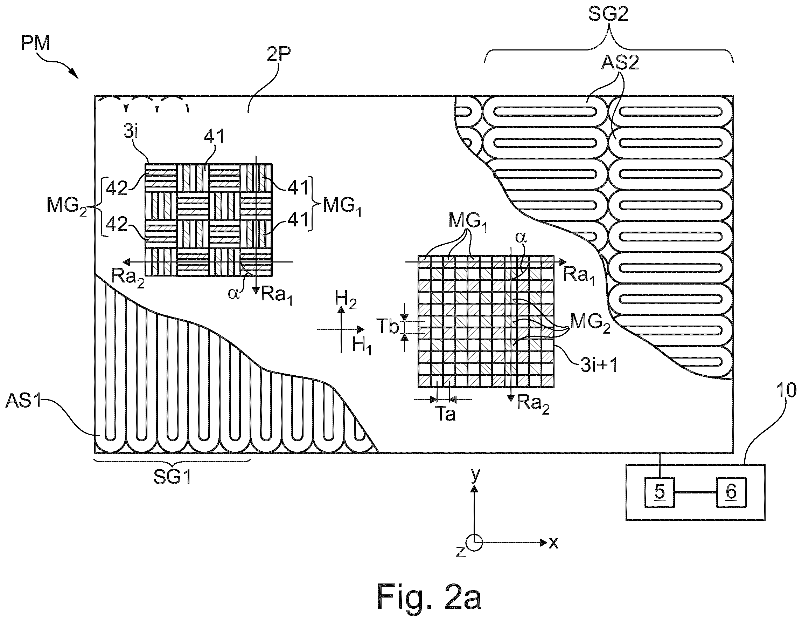

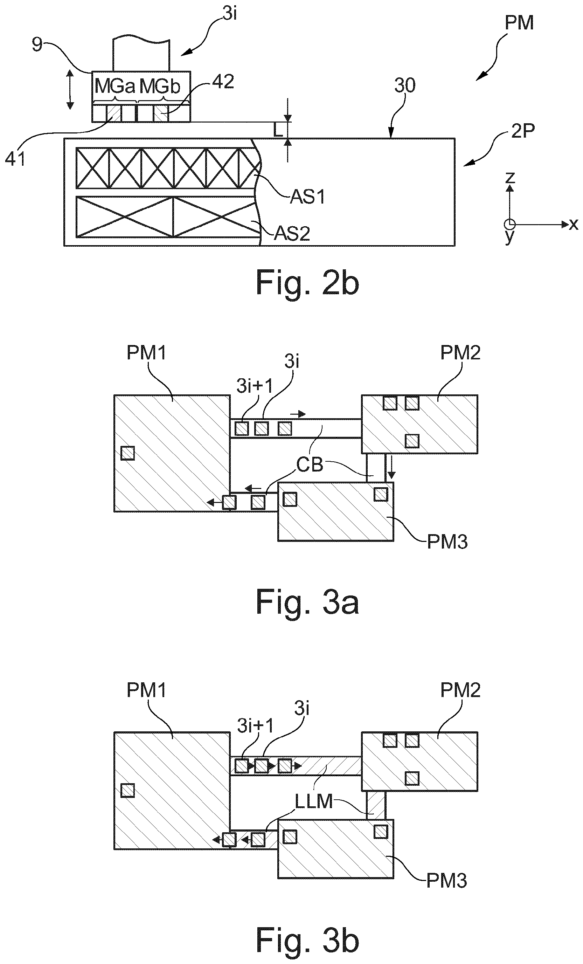

Figs. 2a and 2b further show a simplified exemplary embodiment of an electromagnetic transport device in the form of a planar motor (PM) 1. Specifically, Fig. 2a presents a PM in a partially broken-away plan view, and Fig. 2b shows the PM in a partially broken-away side view. In the case of a PM 1, the planar motor stator 2P takes on the form of at least one movement plane 30. At least one shuttle 3i is movable along the movement plane 30 at least two-dimensionally in two main planar motor movement directions H1, H2 (hereafter short "PM-movement directions" H1, H2). In the case shown, two exemplary shuttles 3i, 3i+1 are depicted. Again, also in the case of a PM 1, a starting position A and a target position B may be the positions of processing stations, at which goods transported by the planar shuttles 3i are treated / loaded / modified / processed etc., or the PM may entirely be encompassed by a processing station, as it is oftentimes the case when LLMs are employed for connecting processing stations and PMs are employed for operating a processing station.

The movement plane 30 can be oriented in space in any way. For the sake of simplicity, only one transport segment is shown in Fig. 2a. Of course, a plurality of transport segments (which can be different) could be arranged next to one another in order to form the planar motor stator 2P and a larger movement plane 30. As a result, the transport device can have a modular design, and movement planes 30 of different shapes and sizes can be realized, connecting processing stations and thus starting positions A and target positions B in all variations. Of course, this modular design is only optional, and it is also possible to provide only a single transport segment in the form of a single assembly. As mentioned before, in the movement plane 30 of the transport segment, also several shuttles 3i can be moved simultaneously and independently of one another.

In the specific case of the PM shown presently, a first coil group SG1 with several drive coils AS1, which defines the first main PM-movement direction H1, and a second coil group SG2 with several drive coils AS2, which defines the second main PM-movement direction H2, are arranged on the transport segment 20. In general, the drive coils are designated by ASi, where "i" again is an index, in order to be able to distinguish the drive coils if necessary. The drive coils AS1 of the first coil group SG1 are arranged next to each other in a specific direction - in this case, in the X-direction of a Cartesian coordinate system - in order to form the first main PM-movement direction H1 for the movement of the shuttle 3i, which in this case extends along the X-axis. The drive coils AS2 of the second coil group SG2 are arranged next to each other in a specific direction - in this case, the Y-direction of a Cartesian coordinate system - in order to form a second main PM-movement direction H2 for the shuttle 3i, which in this case extends along the Y-axis. The drive coils AS1, AS2 of the first and second coil groups SG1, SG2, as shown in Fig. 2a, are preferably arranged relative to one another such that the two main PM-movement directions H1, H2 are orthogonal to one another.

As in the LLM case discussed by means of Fig.1, several drive magnets 41, 42 are arranged on the at least one shuttle 3i, which interact electromagnetically with drive coils AS1, AS2 of at least one of the two coil groups SG1, SG2 in the region of the shuttle 3i for moving the shuttle 3i. For this purpose, the shuttle 3i generally has a main body 9, on the underside of which (facing the movement plane 30) the drive magnets 41, 42 are arranged, as can be seen in Fig. 2b. In Fig. 2a, the main body 9 is shown largely broken away to be able to see the arrangement of the drive magnets 4. As indicated in Fig. 2b, the drive magnets are arranged in several magnet groups MG1, MG2. The drive magnets 41, 42 are usually arranged with alternating polarity, as indicated in Fig. 2b.

Moreover, the first magnet group MG1 and the second magnet group MG2 are mechanically linked, to ensure sufficient mechanical stability and integrity, also in situations where potentially high forces act on the magnets 41, 42. To allow for unrestricted movement in the at least two dimensions of the plane 30, i.e., the at least two PM-movement directions H1, H2, of the planar motor PM, the first plurality of drive magnets 41 is arranged one behind the other in a first arrangement direction Ra1. Said second plurality of drive magnets 42 is arranged one behind the other in a second arrangement direction Ra2 different from the first arrangement direction Ra1, such that the hybrid shuttle 3 may be moved unrestrictedly in the in at least two PM-movement directions H1, H2 on a movement plane 30 of a planar motor PM. As shown in Fig.2a, the first and second arrangement direction Ra2 span an arrangement angle α. By arranging said magnet groups in different directions, it becomes possible to create force components pointing in different directions, hence allowing a movement in an entire plane and not just along a line. As is well-known, an arrangement angle α of 90° yields a symmetric PM, while arrangement angles α below 45° make movements at least in one direction inefficient, as such an arrangement unavoidably introduces at times significant force components in both arrangement directions which need to be compensated. Hence, it is desirable to have arrangement angles α close to 90°.

When designing such magnet arrangements, it is usually beneficial to particularly also take into account the magnetic fields created by the magnets, especially the alignment of such magnetic fields. This can be achieved by arranging the so-called magnetization directions of said magnets. The magnetization direction indicates the specific axis or direction along which the magnet's magnetic field lines flow. In case of a magnet comprising a north pole and a south pole, it indicates the direction from south pole to north pole.

With the PM and the magnet groups MG1, MG2 shown, a substantially unrestricted movement of a shuttle 3i in the two main PM-movement directions H1, H2 becomes possible, for example, in the movement plane 30 of the transport segment 20. It could in this case be possible to move the shuttle 3i, for example, only along the X-axis or only along the Y-axis. The shuttle 3i can be moved simultaneously in both main PM-movement directions H1, H2, e.g., along a two-dimensional movement path BPn lying in the movement plane 30 with an X-coordinate and a Y-coordinate, as indicated on the shuttle 3i in Fig. 2a. As the basic operation principle of a PM is well known as well, further details are spared at this point.

As mentioned at the outset, many applications demand to connect spatially distant PMs. Such PMs may be part of spatially distant processing stations, where high flexibility and precision with regards to the movements of shuttles are required. To save cost and reduce complexity, it is reasonable to connect such PMs by transport systems different from PMs.

A first, comparably cheap and technologically simple option to implement such a connection is to use conveyor belts CB, as shown in Fig.3a. Unfortunately, conveyor belts CB typically allow for comparably slow movements of shuttles and thus transported products only. Moreover, on conveyor belts CB, products usually cannot be moved independently, synchronized movements of shuttles are not possible (e.g., to clamp a product between two shuttles), and also the identity/location of a shuttle (and hence product) on a conveyor gets lost typically. For these reasons, instead of conveyor belts CB, particularly LLMs are preferably employed for linking spatially distant PMs. While still saving cost and complexity, LLMs allow to increase speed as well as precision of the movements of said shuttles 3. An arrangement of three PMs connected by three LLMs is depicted in Fig.3b.

In order to operate the arrangement shown in Fig.3b, it may be provided to, in accordance with a predefined trajectory describing a target movement of the shuttle 3, supply a plurality of drive coils of the first planar motor PM1 with electric current creating a first moving magnetic field to move the shuttle 3 in the first planar motor PM1 in accordance with said trajectory towards a first intersection between the first planar motor PM1 and the long stator linear motor LLM, to supply a plurality of drive coils of the long stator linear motor LLM with electric current creating a second moving magnetic field to move the shuttle 3 in the long stator linear motor LLM from the first intersection towards a second intersection between the long stator linear motor LLM and the second planar motor PM2, and to supply a plurality of drive coils of the second planar motor PM2 with electric current creating a third moving magnetic field to move the shuttle 3 in the second planar motor PM2 in accordance with said trajectory from the second intersection onwards.

As discussed previously, transitions of shuttles 3 between LLMs and PMs are complex operations, and need to be attended to with great care, especially when transporting precious and fragile goods. Thus, the operation of a system comprising PM as well as LLM segments is significantly complicated.

To overcome these obstacles, the present invention proposes a hybrid shuttle 3 which can be driven by a planar motor PM as well as by a long stator linear motor LLM. To that end, the shuttle 3 according to the invention comprises a magnet system allowing an unrestricted movement on a planar motor plane 30, as well as a first bearing component G1 designed to detachably engage with a second bearing component G2 to form a guide system G, said guide system G being designed to restrict the movement of the shuttle 3 to a single degree of freedom, i.e., to the single LLM-movement direction H0 defined by the structure of an LLM stator 2L. In a particularly beneficial manner, the second bearing component G2 is part of an LLM stator 2L, such that the shuttle 3 can be moved freely in a PM, but also in an LLM, where the shuttle is guided by the guide system, restricting the movement to said LLM-movement direction H0.

Also with regards to the magnet system of the shuttle 3 according to the invention, and as explained above, a first magnet group MG1 and a second magnet group MG2 may be provided, the magnet groups MG1, MG2 being mechanically linked.

As explained in the discussion of Figs.2a and 2b, also in case of the shuttle 3 according to the invention, in the first magnet group MG1 of the shuttle 3, a first plurality of drive magnets 41 may be provided, the first plurality of drive magnets 41 magnetized in a first magnetization direction and arranged one behind the other in a first arrangement direction Ra1, and in the second magnet group MG2 of the shuttle 3, a second plurality of drive magnets 42 may be provided, the second plurality of drive magnets 42 magnetized in a second magnetization direction and arranged one behind the other in a second arrangement direction Ra2. In order to allow for unrestricted movement in a PM-plane 30, the first and second arrangement direction Ra2 may span an arrangement angle $\alpha$ of at least 45 degrees, and the first and second magnetization direction may span a magnetization angle of at least 45 degrees.

On a typical planar motor system, such as the one shown in Figs.2a and 2b, six degrees of freedom are stabilized by means of electromagnetic forces produces by said coils in the planar motor stator 2P. Hence, no guiding system G is needed when a shuttle 3 is moved on a PM. On an LLM, however, typically five of the six degrees of freedom need to be guided passively. Such stabilization can be achieved by roller bearings, or dry plain bearings, or air bearings (bearing partners are separated by a thin film of air), or magnetic bearings, or passive magnetic storage, or electrodynamic magnetic bearing. In the latter case, the bearing force is generated by electromagnetic induction. As is well-known in the case of LLMs, e.g. from EP 3 457 560 A1, the remaining, i.e., unrestricted, degree of freedom is used for moving the shuttle 3.

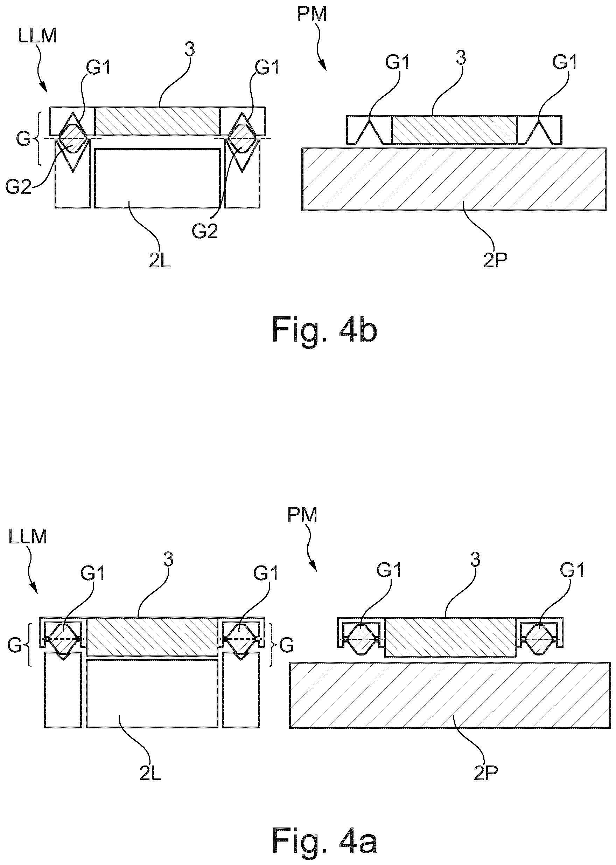

With regards to the shuttle 3 according to the invention, this means that the first bearing component G1 may comprise at least one roller of a rolling bearing, or an outer race of a roller bearing, or in that the first bearing component G1 may comprise a cylinder of a rolling bearing, or in that that the first bearing component G1 may comprise a shaft of a linear bearing, or in that that the first bearing component G1 may comprise a first component of an air bearing. An example of a shuttle according to the invention, where such a roller of a roller bearing is mounted on a shuttle 3 as part of the first bearing component G1 is shown in Fig.4a. However, the bearing element (roller, air bearing, plain bearing, slide bearings, etc.) may also be mounted on the linear motor stator 2L of an LLM, as depicted in Fig.4b. The latter has the advantage of a significant weight reduction on the shuttle. In this case, the first bearing component G1 only forms a bearing recess which is designed to accept the ball comprised in the complementary, second bearing component G2, as depicted in Fig.4b. What can further be seen in Fig.4b is that the second bearing components G2 are structurally separate from the linear motor stator 2L. As mentioned previously, a second bearing component G2 may very well also be an integral part of linear motor stator 2L.

Further, it is to be mentioned that second bearing component G2 for obvious reasons does not form a part of the shuttle 3 according to the invention, as no guiding is needed on a PM, but only on an LLM. As can be seen in Figs.4a, the hybrid shuttle 3 according to the invention comprises two instances of said first bearing component G1, on the right end as well as on the left end of the sectional drawing presented, each first bearing component G1 being designed to engage with a respective second bearing component G2. In case of different forms of the shuttle, also different arrangements of said bearing components G1 are conceivable, potentially leading to an even greater number of first bearing component G1, to stabilize said degrees of freedom and optimally adapting a shuttle 3 to the needs of a specific LLM-PM arrangement. Depending on the specifics of a given use case, just one first bearing component G1 may already be enough, or potentially also more first bearing components G1 may be required.

Also combinations of the guide systems mentioned above are possible. However, the target typically is to minimize the load on a shuttle for planar motor (levitation) operation. Hence, it is beneficial to provide the lighter components / parts of guide system on the shuttle, and the heavier components / parts elsewhere, e.g., on an LLM stator, to avoid an unnecessary addition of weight and complexity.

As mentioned above, different types of bearings are possible within the scope of the invention. In case of air bearings, pressurized air is pressed through multiple nozzles or a porous material in order to create a thin air film as a bearing element, ultimately restricting available degrees of freedom when moving a shuttle. In case of slide bearings, slide bearings with lubrication are conceivable, but also dry slide bearings. In either case, the slide element may either be mounted on a shuttle or on a stator. In the case of electromagnetic bearings, bearing-coils and bearing-magnets are typically provided, which act together in order to create an electromagnetic guiding-force, as is well known from the prior art. Moreover, within the scope of the present invention, also passive magnetic bearing are possible where, e.g., both bearing components G1 and G2 are magnets.

As discussed previously, in order to move a shuttle 3 either on a PM or on an LLM, at least a selection of said drive magnets 41, 42 on the shuttle 3 must (at least temporarily) interact electromagnetically with the drive coils AS1, AS2 of the stator 2L, 2P of either the PM or the LLM. In order to design the shuttle 3 such that it can be moved both on a PM and on an LLM, there are basically two options with regards to arranging drive magnets 41, 42. Essentially, the same magnets 41, 42 may be used for creating a movement in a PM section as well as in an LLM section, or different magnets may be used for the different sections, i.e., for the LLM section and for the PM section. Specifically, the first plurality of drive magnets 41 of the first magnet group MG1 of the shuttle 3 and / or the second plurality of drive magnets 41 of the second magnet group MG2 of the shuttle 3 may be designed to electromagnetically interact with said drive coils of a linear motor stator 2L of a long stator linear motor LLM, creating a drive force Fd to drive the shuttle 3 along the linear motor stator 2L of the long stator linear motor LLM, as shown in Figs.4c and 4d. By appropriately designing the linear motor coils and the planar motor coils, a planar motor shuttle can also be operated on an LLM. The reverse does not apply, as LLM shuttles known from the prior art do not allow a movement in a PM in more than one direction, i.e., on a surface.

It is particularly advantageous if the coil arrangement of the LLM is adjusted according to the pole width Ta, Tb of the drive magnets 41, 42 (see Fig.2a). Within the scope of this embodiment, particularly advantageous arrangements comprise at least two coils of a linear motor stator 2L covered by a single drive magnet 41, 42, or arrangements where the ratio between a coil width and a magnet pole width is a rational number. The latter is particularly advantageous the mitigate the well-known effect of cogging, which is, e.g., explained in detail in US 11,161,700 B2. In case LLM coils are completely covered by the planar motor drive magnets 41, 42, i.e., the length of a magnet unit/magnet plate is greater than the coil height, the generation of torques in direction of a z-axis pointing out of the PM-plane 30 can be prevented. Typically, it is beneficial if the size of a magnet unit is bigger than a coil provided in a stator to create a movement.

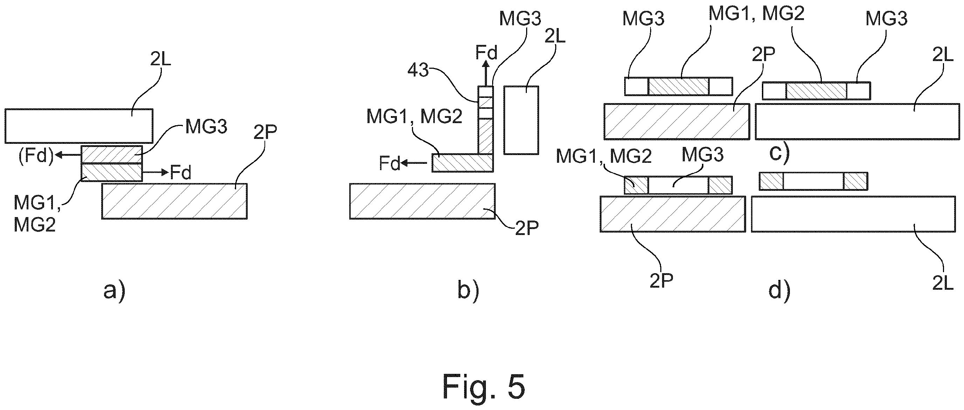

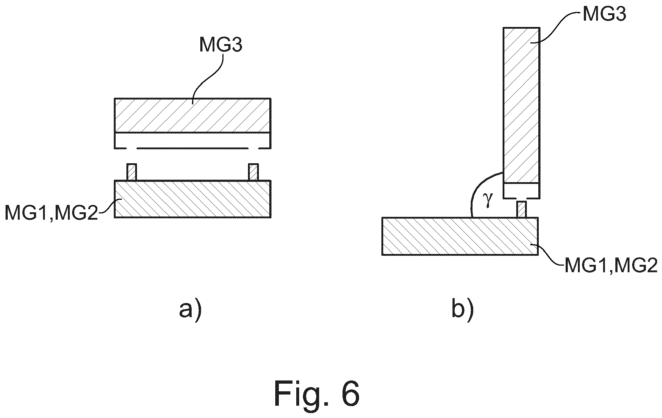

As mentioned previously, and as shown in Fig.5a and 5b, also separate drive magnets (PM magnets) can be used to bring about the movement in a PM section and in an LLM section (LM magnets), respectively. A wide variety of arrangements are conceivable here. For instance, LLM magnets can be arranged above PM magnets, or LLM magnets can be arranged orthogonal to PM magnets, or LLM magnets are arranged next to PM magnets. Further, the connection of the LLM magnets and PM magnets may be fixed or temporary, i.e. mechanically detachable. Various options are conceivable for implementing such a connection. Two such options are shown in Figs.6a and b. It is beneficial if the connection system ensures that the PM and LLM magnet units are magnetically decoupled, i.e., have no influence on the other system, i.e., the magnetic field of the LLM magnet unit is negligible for the actuation of the PM and vice versa.

Depending on the arrangement of the magnet groups MG1, MG2, MG3, different types of interaction between said magnet groups MG1, MG2, MG3 can be ensured. Also with regards to the magnet groups, different types of mounting are conceivable. Specifically, in Figs.6a and 6b two options for detachable links between the magnet groups according to the invention. As mentioned previously, a PM shuttle 3 may also be moved on a LLM. Hence, a PM magnet group may create a contribution to a drive force Fd while moving said shuttle 3 in an LLM segment, even in case a separate LLM magnet group is present. However, within the course of the invention, it was found that such a contribution and such an interaction strongly depends on the angle γ spanned between said magnet groups. In a particularly beneficial embodiment, said angle γ may be selected as an angle equal to or close to 90 degrees, as it is shown in the exemplary embodiment according to Fig.6b. In case the magnet groups are arranged in an angle of 90 degrees to one another, such an interaction vanishes or is, at least, brought to a minimum.

## Claims

1. Hybrid shuttle (3) which is movable along a planar motor stator (2P) of a planar motor (PM) in at least two planar motor movement directions (H1, H2) of the planar motor (PM) as well as along a linear motor stator (2L) of a long stator linear motor (LLM) in a linear motor movement direction (H0) of the long stator linear motor (LLM), **characterized in that** the shuttle (3) comprises at least one first bearing component (G1) designed to detachably engage with a second bearing component (G2) to form a guide system (G), said guide system (G) being designed to guide the movement of the shuttle (1) along the linear motor movement direction (H0).

2. Hybrid shuttle (3) according to claim 1, **characterized in that** in the shuttle (3), a first magnet group (MG1) and a second magnet group (MG2) are provided, the first and second magnet group (MG1, MG2) mechanically linked, **in that** in the first magnet group (MG1) of the shuttle (3), a first plurality of drive magnets (41) is provided, the first plurality of drive magnets (41) arranged one behind another in a first arrangement direction (Ra1), **and in that** in the second magnet group (MG2) of the shuttle (3), a second plurality of drive magnets (42) is provided, the second plurality of drive magnets (42) arranged one behind another in a second arrangement direction (Ra2) different from the a first arrangement direction (Ra1), such that the hybrid shuttle (3) may be moved unrestrictedly in the in at least two planar motor movement directions (H1, H2) on a movement plane (30) of a planar motor (PM).

3. Hybrid shuttle (3) according to claim 1 or 2, **characterized in that** the first bearing component (G1) is part of a mechanical bearing or of an electromagnetic bearing or of a magnetic bearing or of an air bearing.

4. Hybrid shuttle (3) according to any one of the preceding claims, **characterized in that** the first bearing component (G1) comprises at least one sliding component of a slide bearing **or in that** the first bearing component (G1) comprises at least one roller of a rolling bearing, **or in that** the first bearing component (G1) comprises a cylinder of a rolling bearing, **or in that** the first bearing component (G1) comprises a shaft of a linear bearing, **or in that** the first bearing component (G1) forms a bearing recess designed to accept a complementary bearing element.

5. Hybrid shuttle (3) according to any one of the preceding claims 2 to 4, **characterized in that** the first and second arrangement direction (Ra2) span a predefined arrangement angle ($\alpha$), the arrangement angle ($\alpha$) being selected as an angle between 45 degrees and 135 degrees, preferably between 60 degrees and 120 degrees, or more preferably between 75 degrees and 105 degrees, or most preferably equal to 90 degrees.

6. Hybrid shuttle (3) according to any one of the preceding claims 2 to 5, **characterized in that** the first plurality of drive magnets (41) is magnetized in a first magnetization direction, **in that** the second plurality of drive magnets (42) is magnetized in a second magnetization direction, **in that** the first and second magnetization direction span a magnetization angle, **and in that** the magnetization angle is selected as an angle between 45 degrees and 135 degrees, or preferably between 60 degrees and 120 degrees, or more preferably between 75 degrees and 105 degrees, or most preferably equal to 90 degrees.

7. Hybrid shuttle (3) according to any one of preceding claims, **characterized in that** the second bearing component (G2) is not part of the shuttle (3).

8. Hybrid shuttle (3) according to any one of preceding claims, **characterized in that** the second bearing component (G2) forms an integral part of a linear motor stator (2L) of a long stator linear motor (LLM).

9. Hybrid shuttle (3) according to any one of the preceding claims, **characterized in that** the first plurality of drive magnets (41) of the first magnet group (MG1) of the shuttle (3) and / or the second plurality of drive magnets (41) of the second magnet group (MG2) of the shuttle (3) is designed to electromagnetically interact with drive coils of a linear motor stator (2L) of a long stator linear motor (LLM), creating a drive force (Fd) to drive the shuttle (3) along the linear motor stator (2L) of the long stator linear motor (LLM).

10. Hybrid shuttle (3) according to any one of the preceding claims, **characterized in that** a third magnet group (MG3) comprising a third plurality of drive magnets (43) is provided in the shuttle (3), the third plurality of drive magnets (43) being designed to electromagnetically interact with drive coils of a linear motor stator (2L) of a long stator linear motor (LLM), creating a drive force (Fd) to drive the shuttle (3) along the linear motor stator (2L) of the long stator linear motor (LLM).

11. Hybrid shuttle (3) according to claim 10, **characterized in that** the third magnet group (MG3) is detachably linked to the first and / or second magnet group (MG1 MG2).

12. Hybrid shuttle (3) according to any one of the preceding claims, **characterized in that** the at least one first bearing component (G1) is an integral part of the hybrid shuttle (3).

13. Arrangement of at least one planar motor (PM1) and a long stator linear motor (LLM), the at least one planar motor (PM1) mechanically connected to the long stator linear motor (LLM), and a hybrid shuttle (3) according to any one of the preceding claims, the at least one planar motor (PM1) and the long stator linear motor (LLM) being designed to drive the hybrid shuttle (3) from the at least one planar motor (PM1) to the long stator linear motor (LLM) and vice versa.

**14.** Arrangement according to claim 13, **characterized in that** the second bearing component (G2) is part of a linear motor stator (2L) of the long stator linear motor (LLM).

**15.** Arrangement according to claim 13 or 14, **characterized in that** at least one magnet group (MG1, MG2, MG3) of the shuttle (3) is designed to cover at least two coils of the linear motor stator (2L) of the long stator linear motor (LLM).

**16.** Arrangement according to any one of claims 13 to 15, **characterized in that** the arrangement further comprises a second planar motor (PM2), the at least one planar motor (PM1) and the second planar motor (PM2) being connected via the long stator linear motor (LLM), the at least one planar motor (PM1), the second planar motor (PM2), and the long stator linear motor (LLM) being designed to drive the hybrid shuttle (3) from the at least one planar motor (PM1) via the long stator linear motor (LLM) to the second planar motor (PM2) and vice versa.

**17.** Method for operating an arrangement according to any one of claims 13 to 16, **characterized in that,** in accordance with a predefined trajectory describing a target movement of the shuttle (3), a plurality of drive coils of the at least one planar motor (PM1) is supplied with electric current creating a first moving magnetic field to move the shuttle (3) in the at least one planar motor (PM1) in accordance with said trajectory towards a first intersection between the at least one planar motor (PM1) and the long stator linear motor (LLM), **and in that** a plurality of drive coils of the long stator linear motor (LLM) is supplied with electric current creating a second moving magnetic field to move the shuttle (3) in the long stator linear motor (LLM) from the first intersection onwards.

Fig. 1

Fig. 2a

Fig. 2b

Fig. 3a

Fig. 3b

Fig. 4b

Fig. 4a

Fig. 5

a)            b)

Fig. 6

EP 4 656 564 A1

Europäisches Patentamt / European Patent Office / Office européen des brevets

# EUROPEAN SEARCH REPORT

Application Number

EP 24 17 9297

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2022 119231 A1 (KRONES AG [DE]) 1 February 2024 (2024-02-01) | 1,3,4, 7-17 | INV. B65G54/02 |
| Y | * pages 1-14; figures 1-6 * | 2,5,6 | H02K41/03 |
| X | EP 4 332 029 A1 (SIEMENS AG [DE]) 6 March 2024 (2024-03-06) * pages 1-8; figures 1,2 * | 1 | |
| X | EP 2 165 406 B1 (BERGMANN LARS B [DE]) 3 April 2013 (2013-04-03) * pages 1-27; figures 1-89 * | 1 | |
| X | EP 3 904 249 B1 (B & R IND AUTOMATION GMBH [AT]) 22 March 2023 (2023-03-22) * pages 1-13; figures 1-10 * | 1 | |
| A | WO 2022/253883 A1 (B & R IND AUTOMATION GMBH [AT]) 8 December 2022 (2022-12-08) * pages 1-23; figures 1-2 * | 1 | |
| Y | EP 4 115 509 B1 (B & R IND AUTOMATION GMBH [AT]) 24 April 2024 (2024-04-24) * pages 1-28; figures 1-17 * | 2,5,6 | TECHNICAL FIELDS SEARCHED (IPC) B65G H02K |

The present search report has been drawn up for all claims

| Place of search | Date of completion of the search | Examiner |
|---|---|---|
| The Hague | 3 October 2024 | Martin, Benoit |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................................
& : member of the same patent family, corresponding
    document

EPO FORM 1503 03.82 (P04C01)

18

## ANNEX TO THE EUROPEAN SEARCH REPORT
## ON EUROPEAN PATENT APPLICATION NO.

EP 24 17 9297

This annex lists the patent family members relating to the patent documents cited in the above-mentioned European search report.
The members are as contained in the European Patent Office EDP file on
The European Patent Office is in no way liable for these particulars which are merely given for the purpose of information.

03-10-2024

| Patent document cited in search report | | Publication date | Patent family member(s) | | Publication date |
|---|---|---|---|---|---|
| DE 102022119231 A1 | | 01-02-2024 | DE 102022119231 A1 | | 01-02-2024 |
| | | | WO 2024028171 A1 | | 08-02-2024 |
| EP 4332029 | A1 | 06-03-2024 | EP 4332029 A1 | | 06-03-2024 |
| | | | WO 2024046663 A1 | | 07-03-2024 |
| EP 2165406 | B1 | 03-04-2013 | AU 2008258826 A1 | | 11-12-2008 |
| | | | CA 2692956 A1 | | 11-12-2008 |
| | | | CN 101779368 A | | 14-07-2010 |
| | | | DE 102007025822 A1 | | 18-12-2008 |
| | | | DK 2165406 T3 | | 08-07-2013 |
| | | | EP 2165406 A1 | | 24-03-2010 |
| | | | ES 2416429 T3 | | 31-07-2013 |
| | | | IL 202398 A | | 28-05-2014 |
| | | | JP 5506667 B2 | | 28-05-2014 |
| | | | JP 2010528956 A | | 26-08-2010 |
| | | | PL 2165406 T3 | | 30-09-2013 |
| | | | US 2010175943 A1 | | 15-07-2010 |
| | | | WO 2008148513 A1 | | 11-12-2008 |
| EP 3904249 | B1 | 22-03-2023 | AT 523810 A1 | | 15-11-2021 |
| | | | CA 3116120 A1 | | 27-10-2021 |
| | | | CN 113644804 A | | 12-11-2021 |
| | | | EP 3904249 A1 | | 03-11-2021 |
| | | | JP 2021175368 A | | 01-11-2021 |
| | | | KR 20210133156 A | | 05-11-2021 |
| | | | US 2021336522 A1 | | 28-10-2021 |
| WO 2022253883 | A1 | 08-12-2022 | CN 117529421 A | | 06-02-2024 |
| | | | EP 4347301 A1 | | 10-04-2024 |
| | | | JP 2024522540 A | | 21-06-2024 |
| | | | US 2024250597 A1 | | 25-07-2024 |
| | | | WO 2022253883 A1 | | 08-12-2022 |
| EP 4115509 | B1 | 24-04-2024 | AT 523564 A1 | | 15-09-2021 |
| | | | CN 115244837 A | | 25-10-2022 |
| | | | EP 4115509 A1 | | 11-01-2023 |
| | | | JP 2023521282 A | | 24-05-2023 |
| | | | US 2023097926 A1 | | 30-03-2023 |
| | | | WO 2021175885 A1 | | 10-09-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6876107 B2
- US 9202719 B2
- WO 2013143783 A1
- WO 9850760 A2
- US 20130074724 A1
- WO 2004103792 A1
- EP 1270311 B1
- US 20220316525 A1
- EP 3045749 B1
- US 20070024139 A1
- EP 3457560 A1
- US 11161700 B2